# EUROPÄISCHE PATENTSCHRIFT

(11) **EP 0 805 543 B1**
(45) Veröffentlichungstag und Bekanntmachung des Hinweises auf die Patenterteilung: **01.07.2009**
(21) Anmeldenummer: 97107063.6
(22) Anmeldetag: 29.04.1997
(51) Int. Cl.: H02K 5/24

(54) **Elektromotor**
Electric motor
Moteur électrique

(30) Priorität: 02.05.1996 DE 19617448
(43) Veröffentlichungstag der Anmeldung: 05.11.1997
(73) Patentinhaber: WAHL GmbH, 78089 Unterkirnach (DE)
(72) Erfinder: Kienzler, Gerhard, 78098 Triberg-Nussbach (DE); Wursthorn, Günter, 78098 Triberg (DE); Lorenzin, Wolfgang, 78736 Epfendorf (DE)
(74) Vertreter: Patentanwälte Westphal, Mussgnug & Partner

(56) Entgegenhaltungen:
- DE-A- 3 336 385
- DE-C- 3 840 587
- JP-A- 01 283 041
- JP-A- 08 140 306
- JP-A- 63 018 949
- US-A- 4 079 274
- US-A- 4 185 214
- US-A- 5 349 880
- US-A- 5 355 042

## Beschreibung

Die Erfindung betrifft einen Elektromotor mit einem Gehäuse, das einen Stator aufnimmt, in welchem ein Rotor mit einer Rotorwelle drehbar angeordnet ist, sowie mit stirnseitig angeordneten Lagern für die Rotorwelle.

Es ist allgemein bekannt, daß Elektromotoren in einem Motorgehäuse einen stationären, gehäusefesten Ständer und einen hierin drehbaren Läufer aufweisen. Der Rotor ist hierbei auf einer Rotorwelle angeordnet, die ihrerseits in an beiden Stirnseiten des Motorgehäuses angeordneten, sogenannten Lagerschilden gelagert ist. Für die Stromversorgung der Statorwicklung und die am Läufer angeordnete Läuferwicklung, in welcher ein Gegenfeld erzeugt wird, sind ferner Anschlußklemmen vorgesehen, welche jeweils mit den zugeordneten Wicklungen verbunden sind.

Bei der modernen Fertigung von Elektromotoren in Großserien, wie sie heutzutage üblich ist, treten zwangläufig zwischen den einzelnen Bauteilen Toleranzen auf, die auf die fehlerfreie Funktion des Elektromotors keine Auswirkung haben, jedoch eine zum Teil störende Geräuschentwicklung hervorrufen.

Eine wesentliche Ursache für diese Geräuschentwicklung ist die Lagerung für die Rotorwelle, welche in den vorgesehenen Lagern in den Lagerschilden geführt ist. Dabei sind die Wellen zwar mit der vorgeschriebenen Toleranz in die Lager eingepaßt, doch führen Toleranzen, die Oberflächenbeschaffenheit des Rotors und dessen Abweichung von der Geradheit, das heißt die Abweichung seiner Geometrie von den Vorgaben, zu entsprechenden Unwuchten, die sich wiederum auf die vom Lager aufzunehmenden Belastungen auswirken. So hat sich gezeigt, daß insbesondere bei radialen Lagerbelastungen, wie sie beim Einsatz des Motors als Exzenterantrieb auftreten, zum Beispiel in Rasierapparaten, Haarschneidern und dgl., die von den Lagern ausgehende Geräuschentwicklung deutlich erhöht ist.

Ausgehend von diesem Stand der Technik ist es Aufgabe der Erfindung, einen Elektromotor der eingangs genannten Art zu schaffen, der aufgrund seiner Gestaltung möglichst geräuscharm betrieben werden kann, wobei er einfach herstellbar sein soll.

Diese Aufgabe wird erfindungsgemäß durch die kennzeichnenden Merkmale des Patentanspruches 1 gelöst. Weiterentwicklungen und Verbesserungen sind in den abhängigen Patentansprüchen angegeben.

Entsprechend der Erfindung ist zur Lösung der vorstehend angegebenen Aufgabe vorgesehen, daß die Rotorwelle an einem ihrer beiden Enden gezielt einseitig von einer radial gerichteten Kraft beaufschlagt ist. Hiermit wird das erwähnte Passungsspiel zwischen der Rotorwelle und dem Lager beziehungsweise zwischen der Rotorwelle und dem Gehäuse minimiert, indem die Welle in bezug auf ihre Längsachse um den Betrag des vorhandenen Passungsspiels seitlich ausgelenkt wird und damit einer gewissen Vorspannung unterliegt, wodurch eine ohne derartige Maßnahmen aus dem Lagerspiel beziehungsweise dem Passungsspiel resultierende Geräuschentwicklung unterdrückt wird. Grundsätzlich mögliche, hierdurch hervorgerufene Bremseffekte für die Rotorwelle sind vernachlässigbar gering.

Gemäß einer bevorzugten Ausführungsform der Erfindung ist zur Aufbringung der Radialkraft ein Federelement vorgesehen, welches die radial gerichtete Kraft einseitig auf ein Ende der Rotorwelle ausübt.

In vorteilhafter Weiterbildung des erfindungsgemäßen Motors kann das Federelement aus Metall oder aus Kunststoff bestehen. Die erforderlichen Auslenkkräfte sind derart gering, daß die Verwendung von Kunststoffedern als unproblematisch anzusehen ist.

Gemäß einer bevorzugten Ausgestaltung der Erfindung ist als Federelement eine Blattfeder vorgesehen, die am Gehäuse eingespannt ist und sich mit der erforderlichen Vorspannung gegen das vorgesehene Wellenende anlegt.

Gemäß einer vorteilhaften Weiterbildung der Erfindung kann vorgesehen sein, daß das Federelement das Ende der Rotorwelle mittelbar, nämlich unter Zwischenfügung eines Druckstücks beaufschlagt.

Ein derartiges Druckstück, das insbesondere dazu dient, die radiale wie auch gegebenenfalls die axiale Führung der Rotorwelle zu gewährleisten, indem es der Wellenkontur angepaßt ist, kann vorteilhafterweise aus abriebfestem Kunststoff bestehen, insbesondere aus PTFE oder aus Polyamid, aber auch aus einem Metallkörper, zum Beispiel mit einer Auflage aus Lagermetall.

Zusätzlich kann vorgesehen sein, daß das Druckstück eine Filzauflage aufweist, welche mit der Rotorwelle unmittelbar zusammenarbeitet. Diese Filzauflage ist vorteilhafterweise mit einem gleitgünstigen Schmiermittel getränkt, um den Reibungswiderstand zu minimieren.

Eine weitere Ausgestaltung sieht vor, daß das zur Geräuschminderung vorgesehene Federelement das dem betreffenden Wellenende zugeordnete Lager beaufschlagt. Diese Lösung hat den Vorteil, daß die erwähnten Reibungskräfte so gering wie möglich gehalten werden und der Reibverschleiß an der Welle beziehungsweise an dem Federelement vermieden wird.

Entsprechend einer alternativen, quasi reibungsfreien Ausführungsform der erfindungsgemäßen Einrichtung zur Geräuschminderung des Elektromotors ist vorgesehen, daß die Rotorwelle an dem betreffenden Ende eine Permeabilität µ*_{R}* > 1 aufweist, vorzugsweise eine Permeabilität µ_{R} >> 1, und daß dieses Wellenende gezielt einseitig radial mit Magnetkraft beaufschlagt ist.

Hierbei macht sich die Erfindung zunutze, daß die Rotorwellen von Elektromotoren ebenso wie die Rotoren selbst üblicherweise aus ferromagnetischen Werkstoffen gefertigt sind.

Es kann aber auch vorgesehen sein, wenn der Wellenwerkstoff eine Permeabilität µ*_{R}* < 1 aufweist, daß das mit Magnetkraft beaufschlagte Wellenende der Rotorwelle mit einem Zusatzteil versehen ist, welches eine Permeabilität µ*_{R}* > 1 aufweist und die Belastung aus der aufgenommenen Magnetkraft auf das Wellenende überträgt.

Vorteilhafterweise kann dem betreffenden Wellenende ein Magnet mit einem einseitig radial auf das Wellenende gerichteten Magnetfeld zugeordnet sein, welcher die zur Unterdrückung des geräuschbegünstigenden Passungsspiels erforderliche Magnetkraft liefert. Dabei kann der Magnet als Permanentmagnet oder als Elektromagnet ausgebildet sein.

Zwar ist die erfindungsgemäße Einrichtung zur Geräuschminderung grundsätzlich für alle Elektromotoren geeignet, doch ist die Anwendung der Erfindung insbesondere vorgesehen für Klein- und Kleinstmotoren, wie sie üblicherweise als Antriebsmotoren für die erwähnten elektrischen Rasierapparate, Haarschneidegeräte und ähnliche schnellaufende elektrische Geräte eingesetzt werden, bei denen ein hoher Geräuschpegel als störend empfunden wird.

Anhand eines in der Zeichnung dargestellten Ausführungsbeispieles sollen die Erfindung, vorteilhafte Ausgestaltungen und Verbesserungen der Erfindung näher erläutert und beschrieben werden.

Es zeigen:
- Fig. 1: eine Seitenansicht eines erfindungsgemäßen Elektromotors mit einer ersten Einrichtung zur Geräuschminderung;
- Fig. 2: eine Stirnansicht auf den Motor gemäß Fig. 1 mit der ersten Einrichtung zur Geräuschminderung;
- Fig. 3: eine Einzelheit "I" der in Fig. 1 dargestellten ersten Einrichtung zur Geräuschminderung von der Seite;
- Fig. 4: eine Stirnansicht der Einzelheit gemäß Fig. 3;
- Fig. 5: eine Seitenansicht eines erfindungsgemäßen Elektromotors mit einer alternativen Einrichtung zur Geräuschminderung;
- Fig. 6: eine Stirnansicht auf den Motor gemäß Fig. 1 zweiten Einrichtung zur Geräuschminderung;
- Fig. 7: eine Einzelheit "V" der Darstellung in Fig. 1 von der Seite mit der zweiten Einrichtung zur Geräuschminderung und
- Fig. 8: eine Stirnansicht der Einzelheit gemäß Fig. 3;

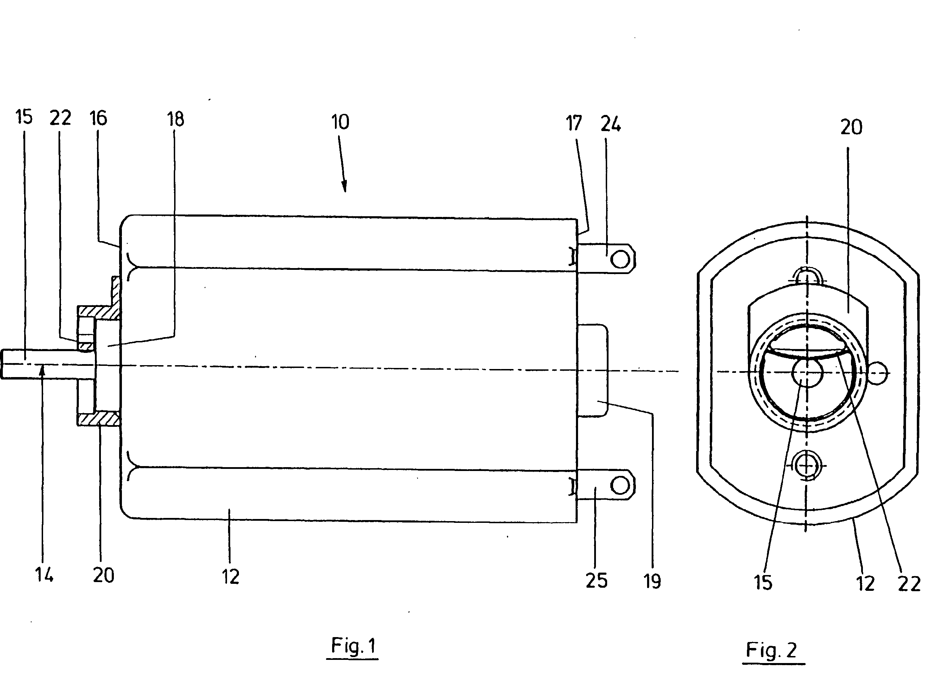

In Fig. 1 ist ein erfindungsgemäßer Elektromotor 10 mit einem Gehäuse 12 in Seitenansicht dargestellt. Der Elektromotor 10 besitzt wie alle solche Motoren einen Stator und einen Rotor, die in dieser Ansicht von der Außenwand des Gehäuses 12 verdeckt sind, sowie eine Rotorwelle 14, mit welcher der Rotor verbunden ist und die an der in Fig. 1 linken Stirnseite 16 des Gehäuses 12 in einem ersten Lager 18 gelagert ist und aus welcher ein Wellenende 15 herausragt.

Das erste Lager 18 arbeitet mit einer Federeinrichtung 20 zusammen, welche das Lager 18 ringartig umgreift und an der stirnseitigen Außenfläche unmittelbar das hier austretende Wellenende der Rotorwelle 14 mit einer Blattfeder 22 einseitig radial beaufschlagt. Hierdurch wird die Rotorwelle um das bestehende Passungsspiel in die der Feder abgewandte Richtung gedrückt, wodurch das bestehende Passungsspiel kompensiert wird und mögliche, durch das Passungsspiel hervorgerufene Geräuschentwicklungen unterdrückt werden.

An der gegenüberliegenden Stirnseite 17 des Gehäuses 12 ist ein Lagerschild 19 mit einem weiteren Lager vorgesehen, in welchem das zugeordnete Ende der Rotorwelle 14 gelagert ist. Außerdem sind an dieser Stirnseite Anschlußkontakte 24, 25 für die elektrische Stromversorgung des Motors 10 angeordnet.

In den weiteren Fig. sind gleiche Teile mit den gleichen Bezugsziffern bezeichnet, so daß sich diesbezügliche Erläuterungen erübrigen und die Beschreibung nur auf die jeweiligen Besonderheiten der Darstellungen eingeht.

In Fig. 2 ist die Ansicht der mit der Federeinrichtung 20 versehenen Stirnseite des Motors 10 wiedergegeben, woraus ersichtlich ist, wie die Blattfeder 22 quasi tangential an der Rotorwelle 14 anliegt.

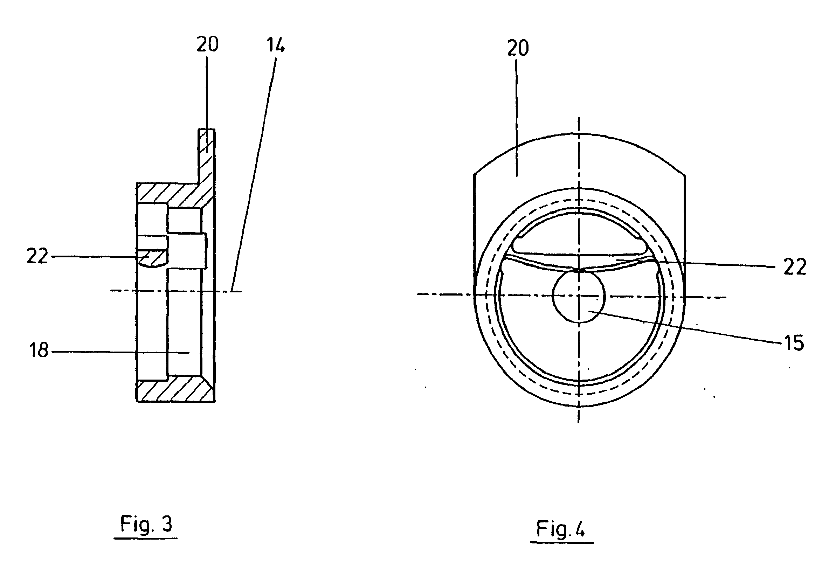

In Fig. 3 ist ein Längsschnitt durch die zuvor beschriebene Federeinrichtung 20, welche in eingebautem Zustand das Stützlager 18 für die Rotorwelle 14 umgreift, in vergrößertem Maßstab dargestellt. Hieraus ist deutlich zu erkennen, daß die Blattfeder 22 der Federeinrichtung 20 eine zur Welle 14 hin gekrümmte Außenkontur aufweist, um die Kontaktfläche mit der Rotorwelle 14 möglichst klein zu halten und so die hieraus resultierenden Reibungsverluste zu minimieren.

In Fig. 4 schließlich ist eine vergrößerte Wiedergabe der Ansicht der außenliegenden Stirnseite der Federeinrichtung 20 gezeigt.

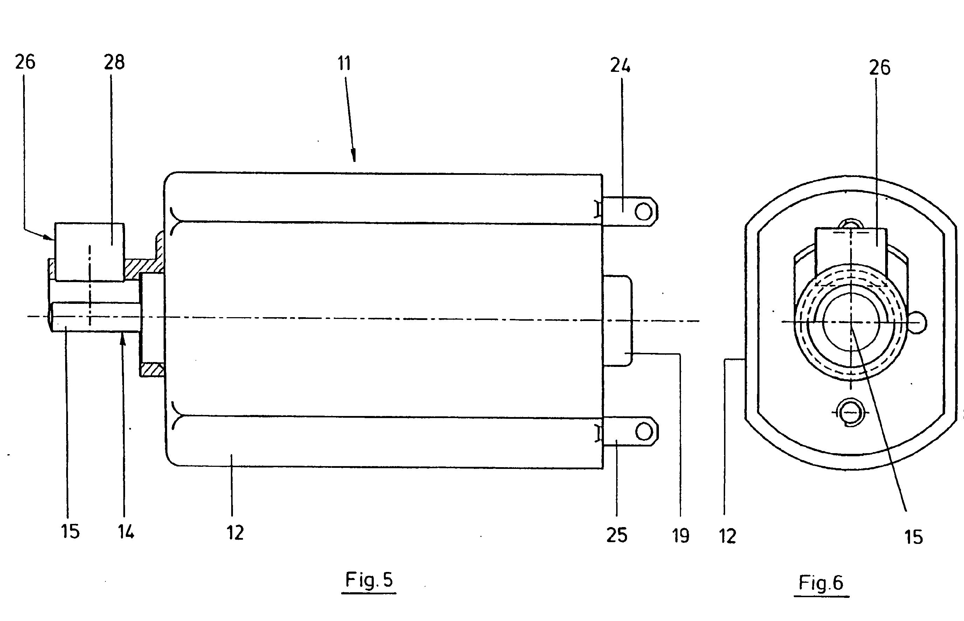

In Fig. 5 ist ebenfalls ein erfindungsgemäßer Elektromotor 11 mit einem Gehäuse 12 in Seitenansicht dargestellt. Der Elektromotor 10 besitzt ebenfalls einen Stator und einen Rotor sowie eine Rotorwelle 14, mit welcher der Rotor verbunden ist und die an der in Fig. 4 linken Stirnseite 16 des Gehäuses 12 in einem ersten Lager 18 gelagert ist und aus welcher ein Wellenende 15 herausragt.

Das erste Lager 18 arbeitet mit einer Magneteinrichtung 26 zusammen, welche das Lager 18 ringartig umgreift und an der stirnseitigen Außenfläche unmittelbar das hier austretende Wellenende der Rotorwelle 14 mit einem Magneten 28 einseitig radial gerichtet beaufschlagt. Auch hier wird die Rotorwelle 14 um das bestehende Passungsspiel in die dem Magneten 28 abgewandte Richtung beaufschlagt, wodurch das bestehende Passungsspiel kompensiert wird und mögliche, durch das Passungsspiel hervorgerufene Geräuschentwicklungen unterdrückt werden.

An der gegenüberliegenden Stirnseite 17 des Gehäuses 12 ist in gleicher Weise wie zuvor bei dem Motor gemäß Fig. 1 bis 4 ein Lagerschild 19 mit einem weiteren Lager vorgesehen, in welchem das zugeordnete Ende der Rotorwelle 14 gelagert ist. Außerdem sind an dieser Stirnseite Anschlußkontakte 24, 25 für die elektrische Stromversorgung des Motors 10 angeordnet.

In Fig. 6 ist die Ansicht der mit der Magneteinrichtung 26 versehenen Stirnseite des Motors 11 wiedergegeben, woraus ersichtlich ist, wie der Magnet 28 quasi tangential im Abstand zu der Rotorwelle 14 angeordnet ist und diese mit seinem Magnetfeld beaufschlagt.

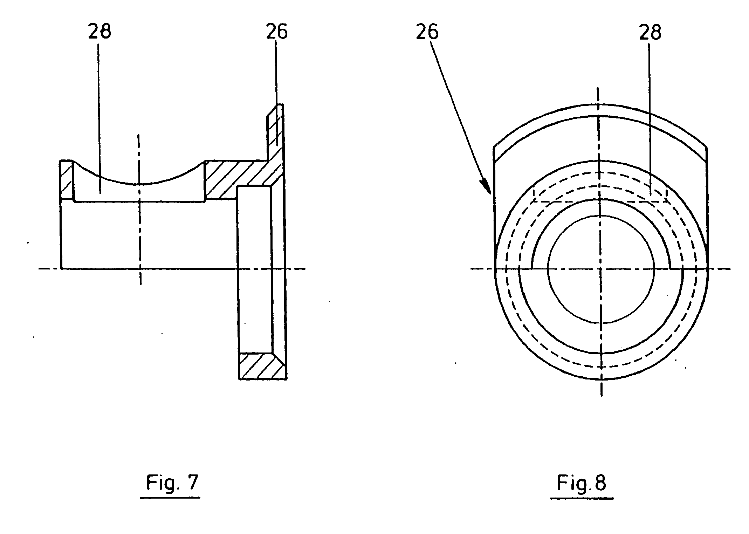

In Fig. 7 ist ein Längsschnitt durch die zuvor beschriebene Magneteinrichtung 26, welche in eingebautem Zustand das Stützlager 18 für die Rotorwelle 14 umgreift, in vergrößertem Maßstab dargestellt. Hieraus ist deutlich zu erkennen, daß der Magnet 28 der Magneteinrichtung 26 einen Abstand zur Welle 14 hin aufweist und auf diese Weise jeglichen Reibkontakt mit der Rotorwelle 14 vermeidet.

In Fig. 8 schließlich ist eine vergrößerte Wiedergabe der Ansicht der außenliegenden Stirnseite der Magneteinrichtung 26 gezeigt.

### Bezugszeichenliste

- 10: Elektromotor
- 11: Elektromotor
- 12: Gehäuse
- 14: Rotorwelle
- 16: Wellenstumpf/ Wellenende
- 18: Lager
- 19: Lagerschild
- 20: Federeinrichtung
- 22: Blattfeder
- 24: Anschlußkontakte
- 25: Anschlußkontakte
- 26: Magneteinrichtung
- 28: Magnet

## Patentansprüche

1. Elektromotor (11) mit einem Gehäuse (12) mit einem darin angeordneten Stator und mit einem im Stator drehbar angeordneten Rotor mit einer Rotorwelle (14), wobei die Rotorwelle (14) den Stator zentral durchgreift, in Lagern (18, 19), die an Stirnseiten des Gehäuses (12) angeordnet sind, gelagert ist, und ein Wellenende (15) aufweist, das stirnseitig aus dem Gehäuse (12) herausragt, sowie mit einer Einrichtung (20; 26) welche eine radial gerichtete Kraft auf die Rotorwelle (14) ausübt, wobei
die Einrichtung (20; 26) die Rotorwelle (14) an dem Wellenende (15) einseitig beaufschlagt, **dadurch gekennzeichnet, dass** die Einrictung (20; 26) das Lager (18) ringartig umgreift.

2. Motor nach Anspruch 1, **dadurch gekennzeichnet, dass** die Einrichtung (20) eine Federeinrichtung mit einem Federelement (22) ist.

3. Motor nach Anspruch 2, **dadurch gekennzeichnet, dass** das Federelement (22) aus Metall besteht.

4. Motor nach Anspruch 2, **dadurch gekennzeichnet, dass** das Federelement (22) aus Kunststoff besteht.

5. Motor nach einem der Ansprüche 2 bis 4, **dadurch gekennzeichnet, dass** als Federelement (22) eine Blattfeder vorgesehen ist.

6. Motor nach Anspruch 3 oder 4, **dadurch gekennzeichnet, dass** das Federelement (22) das dem Wellenende (15) zugeordnete Lager (18) beaufschlagt.

7. Motor nach einem der Ansprüche 2 bis 5, **dadurch gekennzeichnet, dass** das Federelement (22) das Wellenende (15) mittelbar unter Zwischenfügung eines Druckstücks beaufschlagt.

8. Motor nach Anspruch 7, **dadurch gekennzeichnet, dass** das Druckstück aus abriebfestem Kunststoff besteht, insbesondere aus PTFE oder aus Polyamid.

9. Motor nach Anspruch 7 oder 8, **dadurch gekennzeichnet, dass** das Druckstück eine Filzauflage aufweist, welche mit der Rotorwelle (14) unmittelbar zusammenarbeitet.

10. Motor nach Anspruch 7, **dadurch gekennzeichnet, dass** das Druckstück als zusätzliches Lager, insbesondere als Sinterlager, ausgebildet ist.

11. Motor nach Anspruch 1, **dadurch gekennzeichnet, dass** die Rotorwelle (14) an dem Wellenende (15) eine Permeabilität µ_{R} > 1 aufweist und dass die Einrichtung (26) eine Magneteinrichtung ist, die das Wellenende (15) mit Magnetkraft beaufschlagt.

12. Motor nach Anspruch 11, **dadurch gekennzeichnet, dass** das mit Magnetkraft beaufschlagte Wellenende (15) mit einem Zusatzteil mit einer Permeabilität µ*_{R}* > 1 versehen ist, welches die Belastung aus der Magnetkraft auf das Wellenende (15) überträgt.

13. Motor nach Anspruch 12, **dadurch gekennzeichnet, dass** die Magneteinrichtung (26) einen Permanentmagneten (28)aufweist.

14. Motor nach Anspruch 12, **dadurch gekennzeichnet, dass** die Magneteinrichtung (26) einen Elektromagneten aufweist.

## Claims

1. An electric motor (11) having a housing (12), having a states disposed therein with a rotor rotatably disposed in the stator and having a rotor shaft 14,
wherein the rotor shaft (14) passes through the centre of the stator, is mounted in bearings (18, 19) that are disposed on end faces of the housing (12), and comprises a shaft end (15) that protrudes from the end face of the housing (12),
and also having a mechanism (20; 26) that exerts a radially directed force on the rotor shaft (14),
wherein the mechanism (20; 26) acts upon one side of the rotor shaft (14) at the shaft end (15),
**characterised in that** the mechanism (20; 26) encompasses the bearing (18) in the manner of a ring.

2. A motor according to Claim 1,
**characterised in that** the mechanism (20) is a spring mechanism with a spring element (22).

3. A motor according to Claim 2,
**characterised in that** the spring element (22) is made of metal.

4. A motor according to Claim 2,
**characterised in that** the spring element (22) is made of plastic.

5. A motor according to one of Claims 2 to 4,
**characterised in that** a leaf spring is provided as the spring element (22).

6. A motor according to Claim 3 or 4,
**characterised in that** the spring element (22) acts upon the bearing (18) associated with the shaft end (15).

7. A motor according to one of Claims 2 to 5,
**characterised in that** the spring element (22) acts upon the shaft end (15) directly with the insertion of a pressure pad.

8. A motor according to Claim 7,
**characterised in that** the pressure pad is made from abrasion-resistant plastic, in particular from PTFE or from polyamide.

9. A motor according to Claim 7 or 8,
**characterised in that** the pressure pad comprises a felt support that cooperates directly with the rotor shaft (14).

10. A motor according to Claim 7,
**characterised in that** the pressure pad is constructed as an additional bearing, in particular as a sintered bearing.

11. A motor according to Claim 1,
**characterised in that** the rotor shaft (14) at the shaft end (15) comprises a permeability µ_{R} > 1
and **in that** the mechanism (26) is a magnetic device that acts upon the shaft end (15) with magnetic force.

12. A motor according to Claim 11,
**characterised in that** the shaft end (15) acted upon by magnetic force is provided with an additional part comprising a permeability µ_{R} > 1, which transmits the load from the magnetic force to the shaft end (15).

13. A motor according to Claim 12,
**characterised in that** the magnetic device (26) comprises a permanent magnet (28).

14. A motor according to Claim 12,
**characterised in that** the magnetic device (26) comprises an electromagnet.

## Revendications

1. Moteur électrique (11) qui comporte un boîtier (12) recevant un stator et un rotor, logé à rotation dans le stator, avec un axe de rotor (14), l'axe de rotor (14) traverse le stator en position centrale en étant monté dans des paliers (18, 19) des faces frontales du boîtier (12) et comporte une extrémité d'axe (15) qui dépasse de la face frontale du boîtier (12) une installation (20, 26) exerce une force radiale sur l'axe de rotor (14), et cette installation (20, 26) sollicite l'axe de rotor (14) de façon unilatérale à l'extrémité d'axe (15),
**caractérisé en ce que**
l'installation (20, 26) entoure le palier (18) de manière annulaire.

2. Moteur selon la revendication 1,
**caractérisé en ce que**
l'installation (20) est une installation à ressort comportant un élément de ressort (22).

3. Moteur selon la revendication 2,
**caractérisé en ce que**
l'élément de ressort (22) est en métal.

4. Moteur selon la revendication 2,
**caractérisé en ce que**
l'élément de ressort (22) est en matière plastique.

5. Moteur selon l'une des revendications 2 à 4,
**caractérisé en ce que**
l'élément de ressort (22) est un ressort-lame.

6. Moteur selon la revendication 3 ou 4,
**caractérisé en ce que**
l'élément de ressort (22) sollicite le palier (18) associé à l'extrémité d'axe (15).

7. Moteur selon l'une des revendications 2 à 5,
**caractérisé en ce que**
l'élément de ressort (22) sollicite l'extrémité d'axe (15) directement avec interposition d'une pièce de pression.

8. Moteur selon la revendication 7,
**caractérisé en ce que**
la pièce de pression est en une matière plastique résistant à l'abrasion notamment en PTFE ou en un polyamide.

9. Moteur selon la revendication 7 ou 8,
**caractérisé en ce que**
la pièce de pression comporte une garniture de feutre coopérant directement avec l'axe de rotor (14).

10. Moteur selon la revendication 7,
**caractérisé en ce que**
la pièce de pression est réalisée sous forme de palier complémentaire notamment de palier fritté.

11. Moteur selon la revendication 1,
**caractérisé en ce que**
l'axe de rotor (14) présente à l'extrémité d'axe (15) une perméabilité magnétique µ_{R} > 1 et l'installation (26) est une installation magnétique qui exerce une force magnétique sur l'extrémité d'axe (15).

12. Moteur selon la revendication 11,
**caractérisé en ce que**
l'extrémité d'axe (15) sollicitée par la force magnétique est munie d'une pièce complémentaire ayant une perméabilité magnétique µ_{R} > 1, qui transmet à l'extrémité d'axe (15) l'effort résultant de la force magnétique.

13. Moteur selon la revendication 12,
**caractérisé en ce que**
l'installation magnétique (26) comporte un aimant permanent (28).

14. Moteur selon la revendication 12,
**caractérisé en ce que**
l'installation magnétique (26) comporte un électroaimant.
